(19) Europäisches Patentamt / European Patent Office / Office européen des brevets

(11) **EP 4 181 022 A1**

(12) **EUROPEAN PATENT APPLICATION**
published in accordance with Art. 153(4) EPC

(43) Date of publication:
**17.05.2023  Bulletin 2023/20**

(21) Application number: **20944049.4**

(22) Date of filing: **22.12.2020**

(51) International Patent Classification (IPC):
**G06N 3/06** (2006.01)    **G06N 3/08** (2023.01)
**G06N 20/00** (2019.01)

(52) Cooperative Patent Classification (CPC):
**G06F 3/06; G06N 3/06; G06N 3/08; G06N 20/00**

(86) International application number:
**PCT/JP2020/047958**

(87) International publication number:
**WO 2022/009449 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2020  PCT/JP2020/027134**

(71) Applicant: FUJITSU LIMITED
**Kawasaki-shi, Kanagawa 211-8588 (JP)**

(72) Inventors:
• SAKAI, Yasufumi
  Kawasaki-shi, Kanagawa 211-8588 (JP)
• KRESHPA, Enxhi
  Kawasaki-shi, Kanagawa 211-8588 (JP)

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING METHOD, AND INFORMATION PROCESSING PROGRAM**

(57)    An execution time of a neural network is shortened by uniformly quantizing a plurality of elements included in a gradient vector in backpropagation of the neural network.

FIG. 9

START → SET INITIAL VALUE (S1) → PERFORM WARM-UP TRAINING (S2) → RESET BIT WIDTH (S3) → QUANTIZE WEIGHT (S4) → QUANTIZE ACTIVATION (S5) → QUANTIZE ACTIVATION GRADIENT (S6) → QUANTIZE WEIGHT GRADIENT (S7) → PERFORM TRAINING USING QUANTIZED MODEL (S8) → IS SET NUMBER OF TIMES OF TRAINING COMPLETE? (S9) — NO (loop to S3) / YES → END

EP 4 181 022 A1

**Description**

FIELD

The present invention relates to an information processing apparatus, an information processing method, and an information processing program.

BACKGROUND

Neural networks, which have produced remarkable results in image processing and the like, achieve high performance by making configurations thereof complex.

Quantization has been known as a technique of shortening an execution time of the neural networks, which tend to be complex as described above.

In the quantization, a weight data type (e.g., FP32) used in the neural network is converted to a data type with a smaller data capacity (INT8) to reduce a computation time and a communication time. Furthermore, in a conventional quantization method, determination of quantization execution is made for each element included in a weight vector.

For example, a quantization error is compared with a threshold for each element included in the weight vector, and quantization is performed on the element only when the quantization error is less than the threshold.

CITATION LIST

PATENT DOCUMENT

Patent Document 1: International Publication Pamphlet No. WO 2019/008752
Non-Patent Document 1: S. Khoram, et al, "Adaptive quantization of neural networks", ICLR, 2018

SUMMARY

[TECHNICAL PROBLEM]

However, since only weights are quantized and the determination of the quantization execution is made for each element of the weight vector in the conventional quantization method as described above, there is a problem that a degree of shortening the execution time is low in a case of being applied to training of the neural network.

In one aspect, the present invention aims to shorten the execution time of the neural network.

[SOLUTION TO PROBLEM]

Accordingly, this information processing apparatus includes a processor that executes quantization of data to be quantized, and the processor uniformly quantizes a plurality of elements included in a gradient vector in backpropagation of a neural network.

According to an aspect of the embodiments, an information processing apparatus includes a processor that executes quantization of data to be quantized, wherein the processor is configured to uniformly quantize a plurality of elements included in a gradient vector in backpropagation of a neural network.

[ADVANTAGEOUS EFFECTS OF INVENTION]

According to one embodiment, it becomes possible to shorten an execution time of a neural network.

BRIEF DESCRIPTION OF DRAWINGS

FIG. 1 is a diagram exemplifying a hardware configuration of a computer system as an example of an embodiment;
FIG. 2 is a diagram exemplifying a functional configuration of the computer system as an example of the embodiment;
FIG. 3 is a diagram illustrating an outline of a neural network;
FIG. 4 is a diagram exemplifying loss variation in the computer system as an example of the embodiment;

FIG. 5 is a diagram for explaining an activation threshold in the computer system as an example of the embodiment;

FIG. 6 is a diagram for explaining a gradient threshold in the computer system as an example of the embodiment;

FIG. 7 is a diagram illustrating conditional expressions for setting a weight gradient threshold in the computer system as an example of the embodiment;

FIG. 8 is a diagram for explaining an activation gradient threshold in the computer system as an example of the embodiment;

FIG. 9 is a flowchart for explaining a training procedure in the computer system as an example of the embodiment;

FIG. 10 is a flowchart for explaining a quantization process in the computer system as an example of the embodiment;

FIG. 11 is a diagram illustrating a training result of the neural network quantized by the computer system as an example of the embodiment in comparison with each of a case of being quantized by a conventional method and a case of being trained without quantization;

FIG. 12 is a diagram illustrating a training result of the neural network quantized by the computer system as an example of the embodiment in comparison with each of the case of being quantized by the conventional method and the case of being trained without quantization;

FIG. 13 is a diagram exemplifying a functional configuration of a computer system as a modified example of the embodiment;

FIG. 14 is a diagram for explaining a function of a quantization execution unit of the computer system as a modified example of the embodiment;

FIG. 15 is a flowchart for explaining a quantization process in the computer system as a modified example of the embodiment;

FIG. 16 is a diagram illustrating a simulation result of the quantization process by the computer system as a modified example of the embodiment in comparison with a conventional method;

FIG. 17 is a diagram illustrating a simulation result of the quantization process by the computer system as a modified example of the embodiment in comparison with the conventional method;

FIG. 18 is a diagram illustrating a simulation result of the quantization process by the computer system as a modified example of the embodiment in comparison with the conventional method; and

FIG. 19 is a diagram illustrating a simulation result of the quantization process by the computer system as a modified example of the embodiment in comparison with the conventional method.

## DESCRIPTION OF EMBODIMENTS

Hereinafter, an embodiment of an information processing apparatus, an information processing method, and an information processing program will be described with reference to the drawings. Note that the embodiment to be described below is merely an example, and there is no intention to exclude application of various modifications and techniques not explicitly described in the embodiment. In other words, the present embodiment may be variously modified and implemented without departing from the spirit thereof. Furthermore, each drawing is not intended to include only components illustrated in the drawing, and may include another function and the like.

(A) Configuration

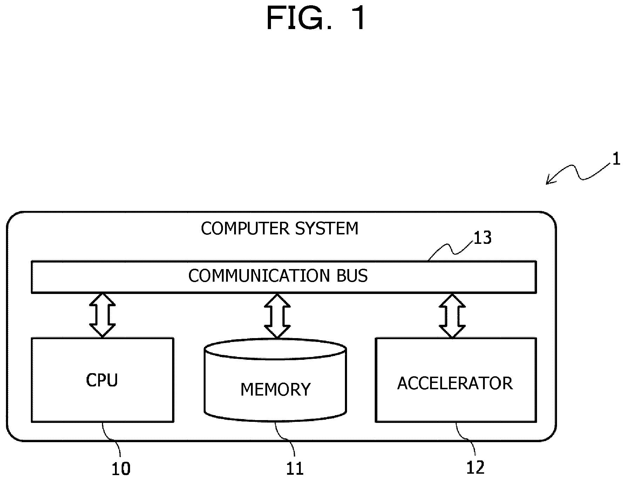

FIG. 1 is a diagram exemplifying a hardware configuration of a computer system 1 as an example of the embodiment.

The computer system 1 is an information processing apparatus, and implements a quantized neural network. As illustrated in FIG. 1, the computer system 1 includes a central processing unit (CPU) 10, a memory 11, and an accelerator 12. Those CPU 10, memory 11, and accelerator 12 are communicably connected to each other via a communication bus 13. The communication bus 13 performs data communication in this computer system 1.

The memory 11 is a storage memory including a read only memory (ROM) and a random access memory (RAM). A software program related to a quantization process, data for this program, and the like are written in the ROM of the memory 11. The software program in the memory 11 is appropriately read and executed by the CPU 10. Furthermore, the RAM of the memory 11 is used as a primary storage memory or a working memory. Parameters, various thresholds, and the like to be used for quantization of a weight, activation, a weight gradient, an activation gradient, and the like are also stored in the RAM of the memory 11.

The accelerator 12 executes operation processing needed for calculation of the neural network, such as matrix operation.

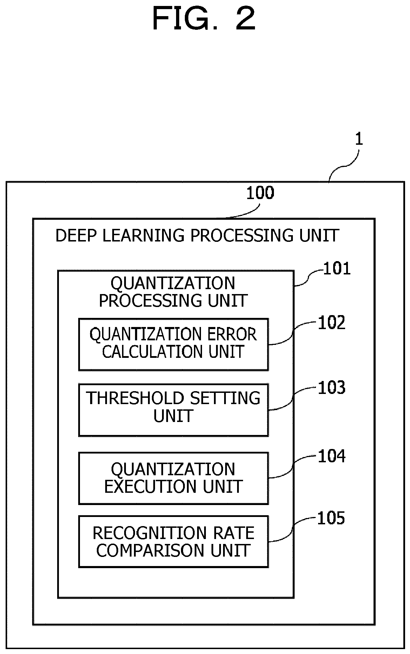

The CPU 10 is a processing device (processor) that performs various types of control and operation, and controls the entire computer system 1 based on installed programs. Then, the CPU 10 executes a deep learning processing program (not illustrated) stored in the memory 11 or the like to implement a function as a deep learning processing unit 100 (FIG. 2) to be described later.

Furthermore, the deep learning processing program may include the information processing program. The CPU 10 executes the information processing program (not illustrated) stored in the memory 11 or the like to implement a function as a quantization processing unit 101 (FIG. 2) to be described later.

Then, the CPU 10 of the computer system 1 executes the deep learning processing program (information processing program) to function as the deep learning processing unit 100 (quantization processing unit 101).

Note that the program (information processing program) for implementing the function as the deep learning processing unit 100 (quantization processing unit 101) is provided in a form recorded in a computer-readable recording medium such as a flexible disk, a compact disc (CD) (CD-ROM, CD recordable (CD-R), CD-rewritable (CD-RW), etc.), a digital versatile disc (DVD) (DVD-ROM, DVD-RAM, DVD-R, DVD+R, DVD-RW, DVD+RW, high-definition (HD) DVD, etc.), a Blu-ray disc, a magnetic disc, an optical disc, or a magneto-optical disc, for example. Then, the computer (computer system 1) reads the program from the recording medium, forwards it to an internal storage device or an external storage device, and stores it for use. Furthermore, the program may be recorded in, for example, a storage device (recording medium) such as a magnetic disc, an optical disc, a magneto-optical disc, or the like, and may be provided from the storage device to the computer via a communication path.

When the function as the deep learning processing unit 100 (quantization processing unit 101) is implemented, the program stored in the internal storage device (RAM or ROM of the memory 11 in the present embodiment) is executed by a microprocessor (CPU 10 in the present embodiment) of the computer. At this time, the computer may read and execute the program recorded in the recording medium.

FIG. 2 is a diagram exemplifying a functional configuration of the computer system 1 as an example of the embodiment.

As illustrated in FIG. 2, the computer system 1 has the function as the deep learning processing unit 100. The deep learning processing unit 100 carries out deep learning in the neural network.

The neural network may be a hardware circuit, or may be a virtual network by software connecting between layers virtually constructed on a computer program by the CPU 10 or the like.

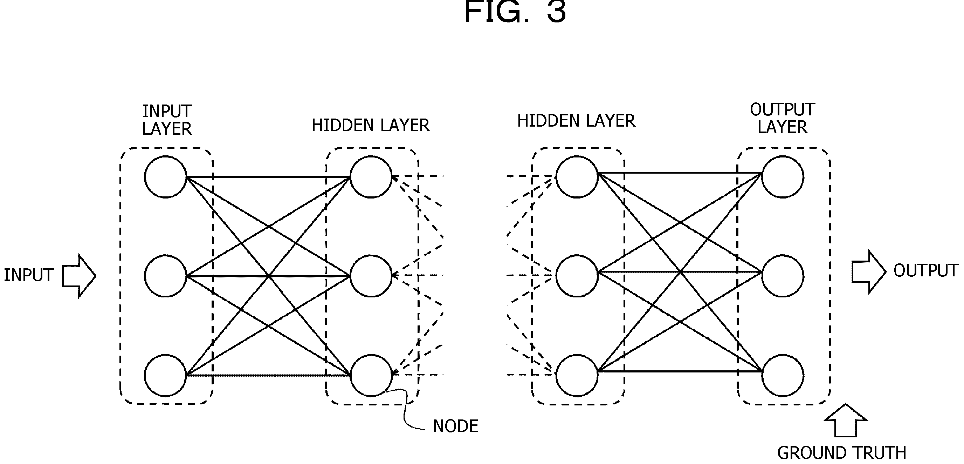

FIG. 3 illustrates an outline of the neural network. The neural network illustrated in FIG. 3 is a deep neural network including a plurality of hidden layers between an input layer and an output layer. For example, the hidden layer is a convolution layer, a pooling layer, a fully-connected layer, or the like. Each circle illustrated in each layer indicates a node that executes a predetermined calculation.

For example, by inputting input data, such as an image, voice, or the like, to the input layer and sequentially executing predetermined calculation in the hidden layer including the convolution layer, the pooling layer, or the like, the neural network executes processing in a forward direction (forward propagation processing) that sequentially transmits information obtained by operation from an input side to an output side. After the processing in the forward direction is executed, in order to reduce a value of an error function obtained from output data output from the output layer and ground truth, processing in a backward direction (backpropagation processing) that determines parameters to be used in the processing in the forward direction is executed. Then, update processing for updating variables such as weights is executed based on a result of the backpropagation processing. For example, a gradient descent method is used as an algorithm for determining an update width of the weights to be used in the calculation of the backpropagation processing.

The deep learning processing unit 100 includes the quantization processing unit 101.

The quantization processing unit 101 quantizes variables (data to be quantized) used in the neural network. As illustrated in FIG. 2, the quantization processing unit 101 has functions as a quantization error calculation unit 102, a threshold setting unit 103, a quantization execution unit 104, and a recognition rate comparison unit 105.

In this computer system 1, data types of elements included in tensors (vectors) used in the neural network are all made the same for quantization. In other words, the quantization processing unit 101 performs the quantization for each tensor. This makes it possible to reduce the number of quantization operations.

For example, in the neural network exemplified in FIG. 3, the number of elements in a weight tensor is determined by the number of nodes in the input/output layer where the tensor exists in a case of full connection. The number of elements in the tensor may be expressed by the following equation (1).

$$\text{Number of elements in tensor} = (\text{number of nodes in input layer}) \times$$
$$(\text{number of nodes in output layer})...(1)$$

For example, even when the number of nodes in the input/output layer is only 100, the number of elements in the tensor is to be 10,000. In other words, when the quantization is carried out for each element according to a conventional method, the quantization operation needs to be carried out 10,000 times.

In this computer system 1, the quantization execution unit 104 uniformly quantizes the elements included in the tensor while making the data types thereof all the same, whereby the number of operations for the quantization may be significantly reduced.

The quantization execution unit 104 compares a quantization error calculated by the quantization error calculation unit 102 to be described later with a threshold for the element to be quantized, and determines a quantization bit width of the tensor to carry out the quantization when the error is smaller than the threshold. Note that the threshold is set by the threshold setting unit 103 to be described later. Furthermore, the determination of the quantization bit width may be achieved by a known technique, and descriptions thereof will be omitted.

The quantization execution unit 104 carries out the quantization when the quantization error is smaller than the threshold as a result of comparing the quantization error of the element to be quantized with the threshold, and does not carry out the quantization when the quantization error is equal to or larger than the threshold.

Hereinafter, in the present embodiment, an exemplary case where the data type of the variables used in the neural network before the quantization is FP32 will be described.

The threshold for each tensor is expressed by the following equation (2).

[Math. 1]

$$\Delta W = \frac{1}{n}\sum_{i=1}^{n}\Delta w_i \leq \sum_{i=1}^{n}\frac{L(FP32) - L(W) - L_{th}}{n \cdot \left|\frac{\partial L(W)}{\partial w_i}\right|} \quad \cdots (2)$$

L(FP32): Value of a loss function obtained when set to float32

L(W): Value of the loss function when quantization is carried out with the set bit width

Lth: Margin of the loss function set from the outside

aL(W)/aw: Gradient obtained when backpropagation is carried out with the set bit width

n: Number of elements included in the tensor to be quantized

In the equation (2) set out above, the quantization error of the tensor is defined as the total quantization error of all elements. Hereinafter, the reference signs same as the aforementioned reference signs in the equation denote similar portions, and thus descriptions thereof will be omitted.

The quantization execution unit 104 quantizes each of the weight, activation, weight gradient, and activation gradient for each layer.

Furthermore, the quantization execution unit 104 carries out the quantization again in a case where a recognition rate of a quantized model by the recognition rate comparison unit 105 to be described later is determined to be deteriorated from the recognition rate before the quantization and the parameters are set again.

Here, an error threshold for each tensor is obtained by the following equation (3).

[Math. 2]

$$Q_{th} = \sum_{i=1}^{n}\frac{L(FP32) - L(W) - L_{th}}{n \cdot \left|\frac{\partial L(W)}{\partial w_i}\right|} \quad \cdots (3)$$

The threshold setting unit 103 to be described later uses the loss value (L(FP32)) in FP32 to derive the threshold. Since the conventional method has been for distillation, the loss of FP32 has been known. However, the loss of FP32 fluctuates during training.

In view of the above, in this computer system 1, the quantization execution unit 104 obtains the loss (FP32) at that time by the forward propagation processing each time the quantization is carried out at the time of training. In other words, the quantization execution unit 104 temporarily sets the data type of the variable to FP32 to perform the forward propagation, thereby obtaining the loss (FP32) at that time.

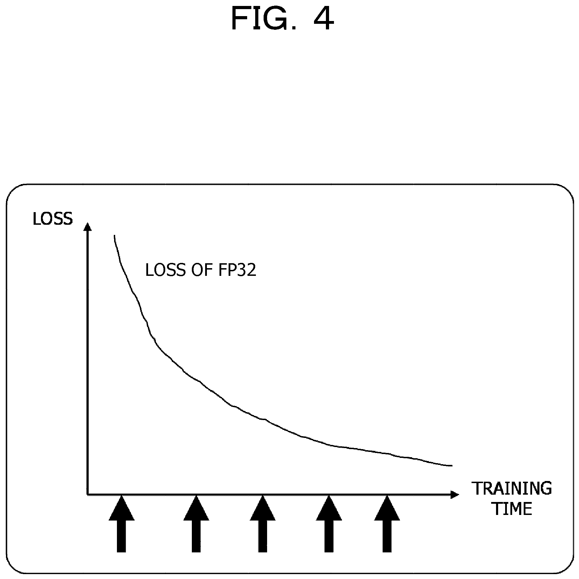

FIG. 4 is a diagram exemplifying loss variation in the computer system 1 as an example of the embodiment.

In FIG. 4, the horizontal axis represents a training time, and the vertical axis represents the loss of FP32. A value of the loss (FP32) decreases according to the training time.

The quantization processing unit 101 carries out the quantization while changing the bit width for each tensor, and calculates a quantization error. The quantization processing unit 101 obtains the minimum bit width that makes the quantization error smaller than the threshold. The quantization processing unit 101 obtains the loss of FP32 at the time of adjusting the bit width.

The threshold setting unit 103 generates a threshold from the value of the loss function and the gradient obtained by training of the neural network.

The threshold setting unit 103 sets a threshold for each of the weight, activation, weight gradient, and activation gradient.

[Weight Threshold]

An equation (4) expresses a weight threshold $Q_{th,\Delta Wk}$ to be used when quantization is carried out at the k-th training.

[Math. 3]

$$Q_{th,\Delta W_k} = \sum_{i=1}^{n} \frac{\left| L_{full,k} - L_{Q,k} - L_{th} \right|}{n \cdot \left| \dfrac{\partial L_{Q,k}}{\partial w_{i,k}} \right|} \quad \cdots (4)$$

Note that $L_{full,k}$ represents a loss function based on verification data derived without quantizing the k-th training result (network model). Furthermore, $L_{Q,k}$ represents a loss function based on verification data derived by quantizing the k-th training result (network model).

[Activation Threshold]

An equation (5) expresses an activation threshold $Q_{th,\Delta Xk}$ to be used when quantization is carried out at the k-th training.

[Math. 4]

$$Q_{th,\Delta X_k} = \sum_{i=1}^{n} \frac{\left| L_{full,k} - L_{Q,k} - L_{th} \right|}{n \cdot \left| \dfrac{\partial L_{Q,k}}{\partial x_{i,k}} \right|} \quad \cdots (5)$$

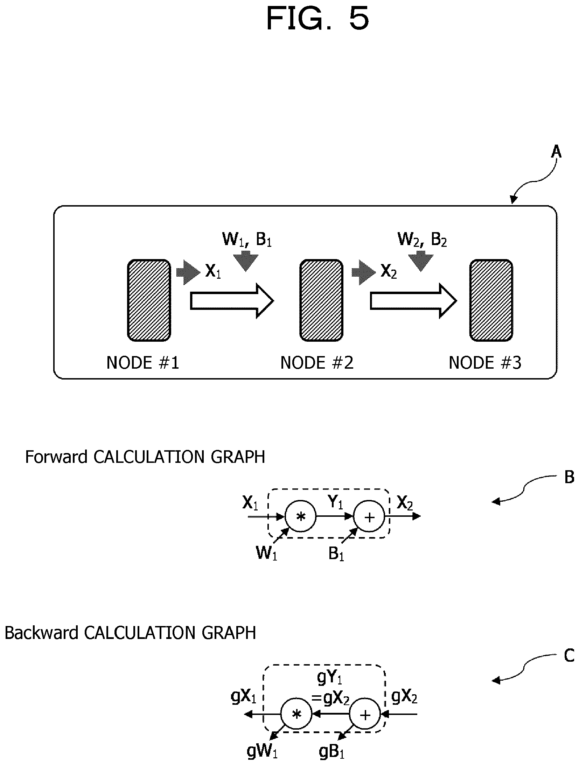

FIG. 5 is a diagram for explaining the activation threshold in the computer system 1 as an example of the embodiment.

In FIG. 5, a reference sign A indicates three nodes (layers) #1 to #3 in the neural network, with the node #1 corresponding to the input layer, the node #2 to the hidden layer, and the node #3 to the output layer.

A reference sign B indicates a forward calculation graph in the node #2 of the neural network indicated by the reference sign A. $X_1$ represents input data, and $X_2$ and $Y_1$ represent activation (intermediate output data). $W_1$ and $W_2$ represent weights, and $B_1$ and $B_2$ represent biases. Each of those input data, activation, weights, and biases is a tensor (vector).

A reference sign C indicates a backward calculation graph in the node #2 of the neural network indicated by the reference sign A. The gradient of $X_1$ is represented by $gX_1$, and the gradient of $X_2$ is represented by $gX_2$. The gradients of $W_1$ and $W_2$ are represented by $gW_1$ and $gW_2$, respectively, and the gradients of $B_1$ and $B_2$ are represented by $gB_1$ and $gB_2$, respectively. The gradient of $Y_1$ is represented by $gY_1$. A threshold of $Y_1$ is equal to a threshold of $X_2$, and the gradient $gY_1$ of $Y_1$ is equal to the gradient $gX_2$ of $X_2$ ($gY_1 = gX_2$). Each of those gradients is a tensor (vector).

In the activation threshold, the activation gradient corresponding to the activation in the forward propagation is used as a sensitivity coefficient.

A threshold $Q_{th,\Delta X1}$ of the tensor $X_1$ of the input data is expressed by an equation (6).

[Math. 5]

$$Q_{th,\Delta X_1} = \sum_{i=1}^{n} \frac{\left|L_{32,k} - L_Q\right|}{n \cdot \left|\frac{\partial L_Q}{\partial x_{1,i}}\right|} \qquad \cdots (6)$$

In the equation (6), the gradient $gX_1$ of $X_1$ is used as a sensitivity coefficient.

Furthermore, a threshold $Q_{th,\Delta Y1}$ of the tensor $Y_1$ of the intermediate data is expressed by an equation (7).

[Math. 6]

$$Q_{th,\Delta Y_1} = \sum_{i=1}^{n} \frac{\left|L_{32,k} - L_Q\right|}{n \cdot \left|\frac{\partial L_Q}{\partial x_{2,i}}\right|} \qquad \cdots (7)$$

In the equation (7), the gradient $gX_2$ of $X_2$ is used as a sensitivity coefficient.

[Gradient Threshold]

The threshold setting unit 103 calculates a threshold for the gradient using the loss function and the gradient (sensitivity coefficient) for the next training.

A loss function and a gradient at a time of certain training only reflect weight and activation values at the current training. Furthermore, the loss function and the gradient at the current training do not reflect a gradient quantization error.

For example, the loss function and the gradient at the k-th training only reflect the weight and activation values at the k-th training, and the loss function and the gradient at the k-th training do not reflect the gradient quantization error generated at the k-th training.

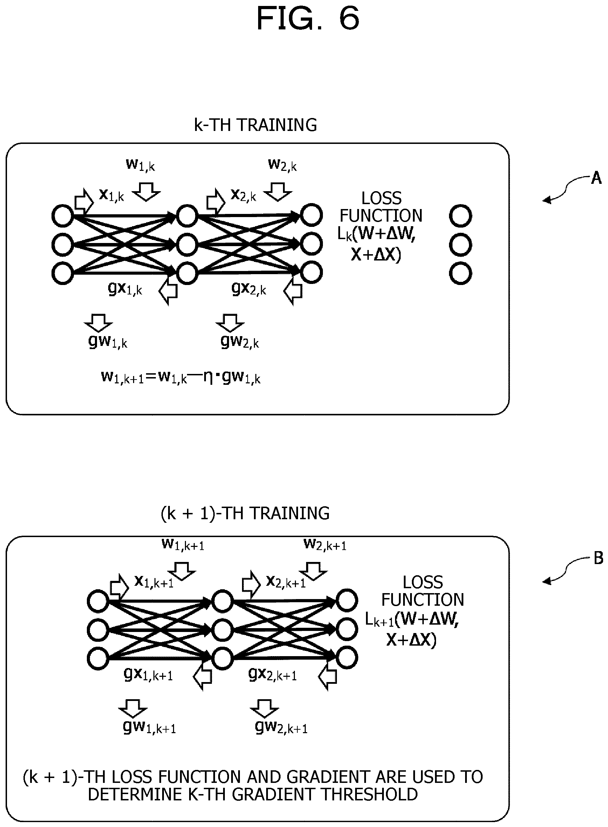

FIG. 6 is a diagram for explaining the gradient threshold in the computer system 1 as an example of the embodiment.

In FIG. 6, a reference sign A indicates k-th training, and a reference sign B indicates (k + 1)-th training.

The loss function at the k-th training is represented by $L_k(W + \Delta W, X + \Delta X)$. Furthermore, the loss function at the (k + 1)-th training is represented by $L_{k+1}(W + \Delta W, X + \Delta X)$.

The threshold setting unit 103 determines a k-th gradient threshold using the (k + 1)-th loss function and gradient.

[Weight Gradient Threshold]

An equation (8) expresses a weight gradient threshold $Q_{th,\Delta GWk}$ to be used when quantization is carried out at the k-th training.

[Math. 7]

$$Q_{th,\Delta GW_k} = \frac{1}{\eta} \sum_{i=1}^{n} \frac{\left|L_{full,k+1} - L_{Q,k+1} - L_{th}\right|}{n \cdot \left|\frac{\partial L_{Q,k+1}}{\partial w_{i,k+1}}\right|} \qquad \cdots (8)$$

Here, $\eta$ represents a training rate to be used at the time of weight updating. With the k-th weight gradient quantized, the (k + 1)-th weight contains a quantization error $\Delta W_{k+1}$.

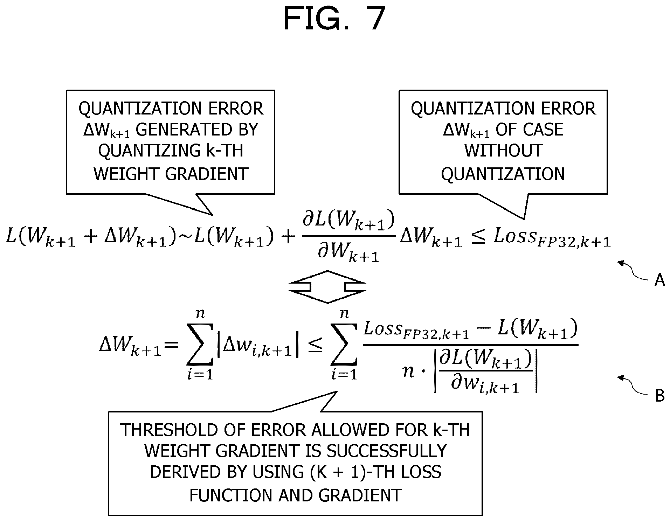

FIG. 7 illustrates conditional expressions for setting a weight gradient threshold in the computer system 1 as an example of the embodiment.

In FIG. 7, a reference sign A indicates a condition under which the loss function is smaller than the (k + 1)-th ideal loss function even if the (k + 1)-th weight contains an error.

The left side of the inequality indicated by the reference sign A represents the quantization error generated by the k-th weight gradient being quantized. On the other hand, the right side (Loss$_{FP32,k+1}$) of the inequality indicated by the reference sign A represents the loss when the quantization is not carried out. In other words, the condition is that the quantization error generated by the k-th weight gradient being quantized is equal to or less than the loss when the quantization is not carried out.

In FIG. 7, the inequality indicated by a reference sign B represents the quantization error $\Delta W_{k+1}$, which is obtained by transforming the inequality indicated by the reference sign A. In this manner, with the (k + 1)-th loss function and gradient used, the threshold of the error allowed for the k-th weight gradient is derived.

[Activation Gradient Threshold]

An equation (9) expresses an activation gradient threshold Q$_{th,\Delta GXk}$ to be used when quantization is carried out at the k-th training.
[Math. 8]

$$Q_{th,\Delta GX_k} = \frac{1}{\eta} \sum_{i=1}^{n} \frac{\left| L_{full,k+1} - L_{Q,k+1} - L_{th} \right|}{n \cdot \left| \frac{\partial L_{Q,k+1}}{\partial x_{i,k+1}} \right|} \quad \cdots (9)$$

The threshold setting unit 103 uses a bias error threshold as an activation error threshold. The tensor quantization error is defined as the sum of all elements. L1 norms of the quantization errors of the bias gradient and the activation gradient are the same.

Therefore, considering the method of deriving the weight gradient threshold, the k-th activation gradient threshold may be calculated from the (k + 1)-th loss function and activation gradient.

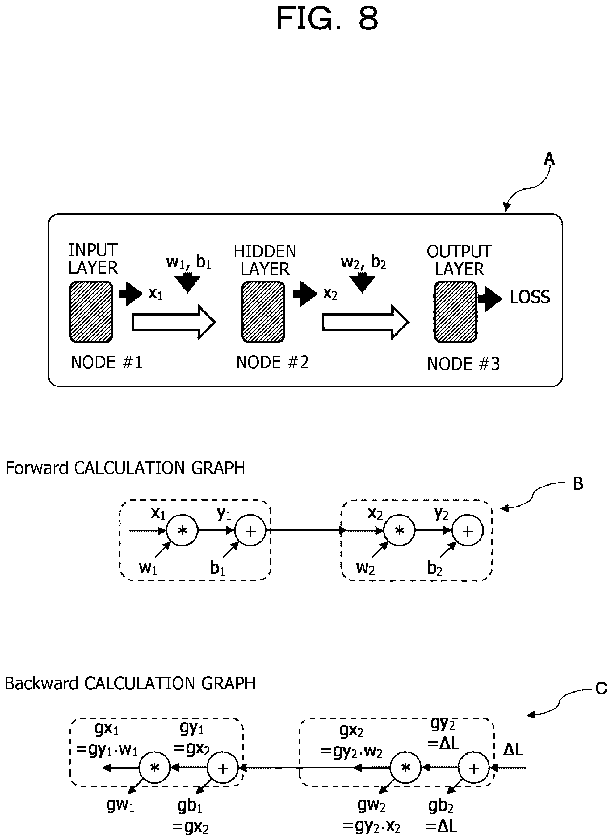

FIG. 8 is a diagram for explaining the activation gradient threshold in the computer system 1 as an example of the embodiment.

In FIG. 8, a reference sign A indicates three nodes (layers) #1 to #3 in the neural network, with the node #1 corresponding to the input layer, the node #2 to the hidden layer, and the node #3 to the output layer.

A reference sign B indicates a forward calculation graph in the neural network indicated by the reference sign A. $X_1$ represents a tensor of input data. Furthermore, a reference sign C indicates a backward calculation graph in the neural network indicated by the reference sign A.

The gradient of $x_1$ is represented by $gx_1$, and the gradient of $X_2$ is represented by $gx_2$. The gradients of $w_1$ and $w_2$ are represented by $gw_1$ and $gw_2$, respectively, and the gradients of $b_1$ and $b_2$ are represented by $gb_1$ and $gb_2$, respectively. The gradient of $x_1$ is represented by $gx_1$, and the gradient of $y_1$ is represented by $gy_1$. The gradient $gy_1$ is equal to the gradient $gx_2$ ($gy_1 = gx_2$). Furthermore, L1 norms of the gradient $gb_1$ and the gradient $gx_2$ are equal to each other ($gb_1 = gx_2$). Furthermore, each of L1 norms of the gradient $gy_2$ and the gradient $gb_2$ is equal to an L1 norm of a loss $\Delta L$ ($gy_2 = gb_2 = \Delta L$). The gradient $gw_2$ is equal to the inner product of the gradients $gy_2$ and $x_2$ ($gw_2 = gy_2 * x_2$). The gradient $gx_2$ is equal to the inner product of the gradient $gy_2$ and the weight $w_2$ ($gx_2 = gy_2 * w_2$). Furthermore, the gradient $gw_2$ is equal to the inner product of the gradients $gy_2$ and $x_2$ ($gw_2 = gy_2 * x_2$).

Since the L1 norms of $gb_n$ and $gy_n$ are equal to each other, the bias gradient and the activation gradient have the same threshold. The k-th activation gradient threshold is defined by the (k + 1)-th activation gradient and loss function.

The recognition rate comparison unit 105 compares the recognition rate of the model (quantized model) quantized with respect to the weight, activation, weight gradient, and activation gradient for each layer by the quantization processing unit 101 with the recognition rate of FP32.

In a case where the recognition rate of the quantized model is not equivalent to the recognition rate of FP32 as a result of the comparison, for example, in a case where the recognition rate of the quantized model is lower than the recognition rate of FP32 by equal to or more than a predetermined value, the recognition rate comparison unit 105 performs control of setting parameters in such a manner that each of the thresholds described above becomes smaller. Specifically, the recognition rate comparison unit 105 increases Lth in such a manner that each of the thresholds becomes smaller.

A high degree of quantization increases the risk of accuracy deterioration. In view of the above, in this computer system 1, the recognition rate comparison unit 105 has a loop for accuracy assurance outside the bit width determination algorithm.

In this computer system 1, when the recognition rate of the quantized model is determined to be deteriorated from the recognition rate of FP32, the parameters are set again in such a manner that each threshold of the weight, activation, weight gradient, and activation gradient becomes smaller, and then the quantization is performed again on the weight, activation, weight gradient, and activation gradient.

(B) Operation

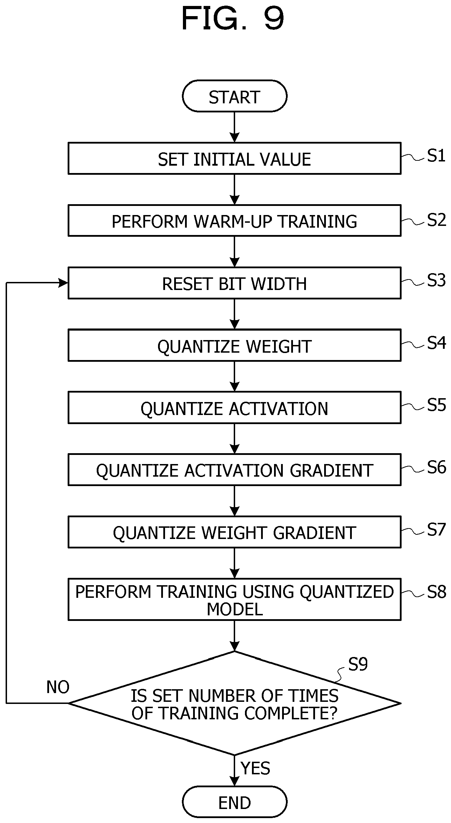

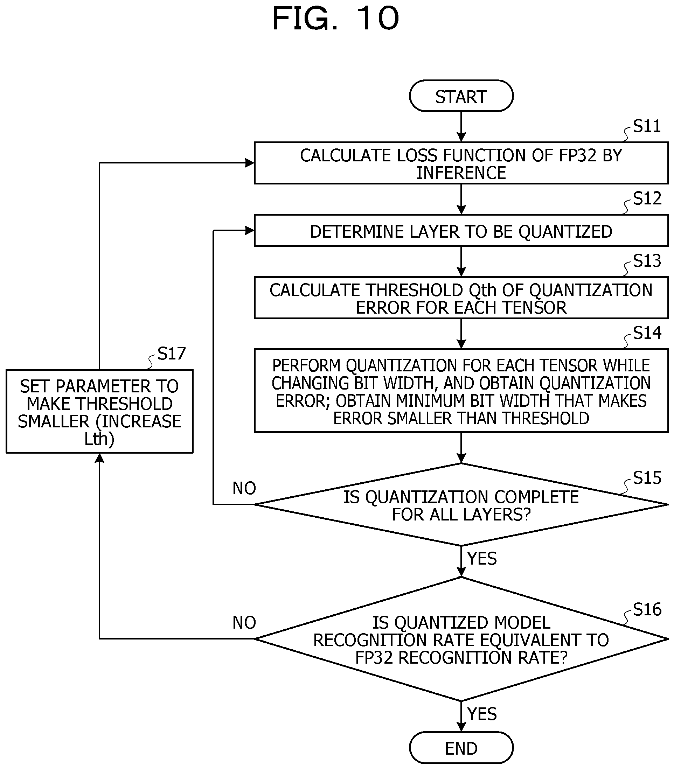

A training procedure in the computer system 1 as an example of the embodiment configured as described above will be described with reference to a flowchart (steps S1 to S9) illustrated in FIG. 9.
In step S1, an initial value of each of variables and the like is set.
In step S2, the quantization processing unit 101 performs warm-up training.
In step S3, the quantization processing unit 101 resets the bit width.
The quantization processing unit 101 calculates a quantization error of a tensor used in the neural network. The threshold setting unit 103 calculates each threshold of the weight, activation, weight gradient, and activation gradient from the value of the loss function and the gradient obtained by training of the neural network.
The quantization execution unit 104 compares the calculated quantization error with a threshold to determine a quantization bit width of the tensor. The quantization execution unit 104 quantizes the weight (step S4). Furthermore, the quantization execution unit 104 quantizes the activation (step S5), quantizes the activation gradient (step S6), and further quantizes the weight gradient (step S7). Through those quantization processes, the bit width of the weight parameter of each layer is determined and output.
Note that the processing order of those steps S4 to S7 is not limited to this, and may be changed as appropriate to be executed, such as by changing the order. Furthermore, details of the quantization process for each tensor in those steps S4 to S7 will be described later using a flowchart illustrated in FIG. 10.
Thereafter, in step S8, the deep learning processing unit 100 performs training using the model having been subject to the quantization (quantized model) a predetermined number of times.
In step S9, the deep learning processing unit 100 checks whether the set number of times of training has been complete. If the set number of times of training has not been complete as a result of the checking (see No route in step S9), the process returns to step S3. Furthermore, if the set number of times of training has been complete (see YES route in step S9), the process is terminated.
Next, the quantization process in the computer system 1 as an example of the embodiment will be described with reference to the flowchart (steps S11 to S17) illustrated in FIG. 10.
In step S11, the quantization execution unit 104 calculates a loss function of FP32 (loss (FP32)) by the forward propagation processing.
In step S12, the quantization execution unit 104 determines a layer to be quantized. In step S13, the quantization execution unit 104 calculates a threshold Qth of the quantization error for each tensor.
In step S14, the quantization execution unit 104 carries out the quantization for each tensor while changing the bit width, and obtains a quantization error. The quantization execution unit 104 obtains the minimum bit width that makes the quantization error smaller than the threshold.
In step S15, the quantization execution unit 104 checks whether the quantization has been complete for all layers. If the quantization has been complete for all layers as a result of the checking (see NO route in step S15), the process returns to step S12. On the other hand, if the quantization has been complete for all layers (see YES route in step S15), the process proceeds to step S16.
In step S16, the recognition rate comparison unit 105 checks whether the recognition rate of the quantized model quantized by the quantization processing unit 101 is equivalent to the recognition rate of FP32. For example, if the recognition rate of the quantized model is lower than the recognition rate of FP32 by equal to or more than a predetermined value, the recognition rate of the quantized model is not equivalent to the recognition rate of FP32. In such a case (see NO route in step S16), the process proceeds to step S17.
In step S17, the recognition rate comparison unit 105 increases Lth in such a manner that the threshold becomes smaller. Thereafter, the process returns to step S11.
On the other hand, if the recognition rate of the quantized model is equivalent to the recognition rate of FP32 as a result of the checking in step S16 (see YES route in step S16), the process is terminated.

(C) Effects

As described above, according to the computer system 1 as an example of the embodiment, the quantization execution unit 104 executes quantization for each tensor, and also quantizes the gradient generated in backpropagation. This makes it possible to shorten the execution time of the neural network.
The quantization execution unit 104 compares the quantization error of the element to be quantized with a threshold, and carries out the quantization when the error is smaller than the threshold, and does not carry out the quantization when the quantization error is equal to or larger than the threshold. This makes it possible to suppress deterioration of the recognition rate caused by the quantization.

The quantization execution unit 104 quantizes a plurality of elements included in the tensor (weight vector, activation vector, activation gradient vector, and weight gradient vector) while making the data types thereof all the same, whereby the quantization may be carried out with a low load, and the processing time for the quantization may be shortened.

At the time of quantizing a plurality of elements included in the gradient vector, the threshold setting unit 103 creates a threshold using the loss function for the next ((k + 1)-th) training subsequently executed, whereby whether or not the quantization with respect to the gradient vector may be carried out may be reliably determined.

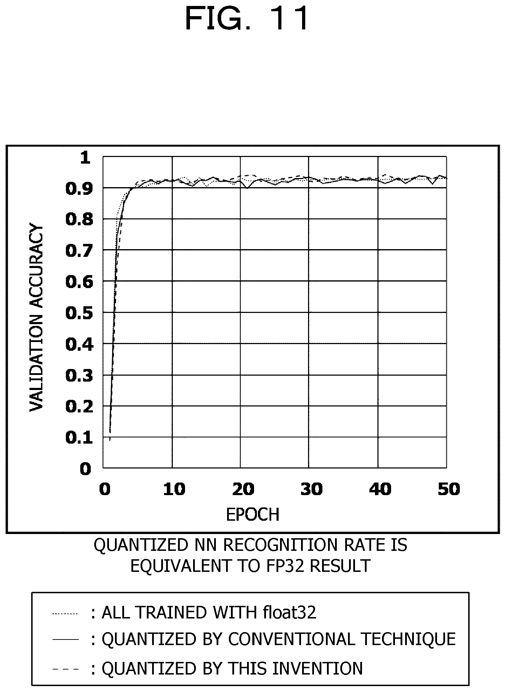

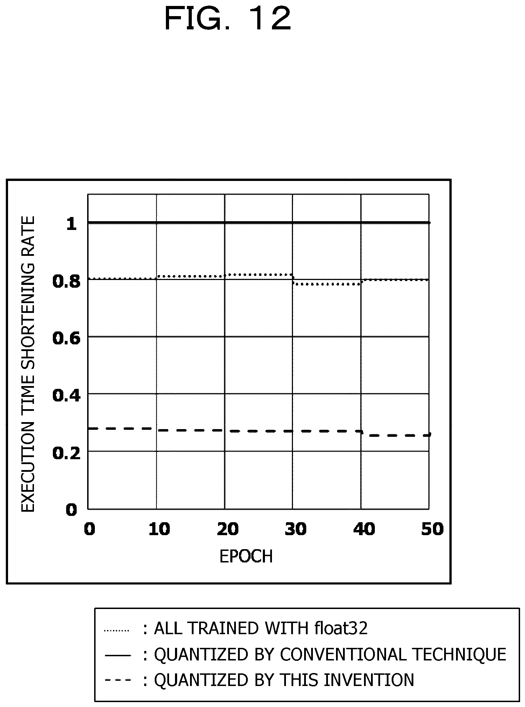

FIGs. 11 and 12 are diagrams illustrating a training result of the neural network quantized by the computer system 1 as an example of the embodiment in comparison with each of the case of being quantized by the conventional method and the case of being trained without quantization. Note that FIG. 11 illustrates a recognition rate, and FIG. 12 illustrates an execution time shortening rate.

In those FIGs. 11 and 12, the conventional method indicates a technique of quantizing only the weights. Furthermore, the method without quantization trains all layers with float32.

As illustrated in FIG. 11, the neural network quantized by this computer system 1 achieves a recognition rate equivalent to that of the conventional method and the case without quantization.

Furthermore, as for the execution time, it becomes possible to increase the execution time shortening rate to approximately 70% according to the quantization method of this computer system 1 with respect to the execution time of the case where quantization is not carried out, as illustrated in FIG. 12.

Furthermore, the threshold setting unit 103 calculates an error threshold for the gradient to be quantized by carrying out the next training. Furthermore, a bias threshold is used as the error threshold of the activation gradient. This makes it possible to determine a threshold suitable for the execution of the quantization.


(D) Modified Examples

In the computer system 1 as an example of the embodiment described above, the quantization execution unit 104 carries out the quantization for each tensor and also quantizes the gradient generated in backpropagation, thereby shortening the execution time of the neural network.

Meanwhile, bit width adjustment in the quantization is performed by, for example, the following method.

In other words, a gradient of the loss with respect to the parameter is calculated, and a quantization threshold is calculated and set based on the gradient of the loss. A bit width is determined for each parameter based on the set quantization threshold, and each parameter is quantized with the determined bit width.

Then, the parameter is quantized with the newly determined bit width, and a model loss after the quantization is calculated. Furthermore, the calculated model loss is compared with a loss limit, and in a case where the model loss is smaller than the loss limit, the parameter is updated to expand the trust region radius. On the other hand, in a case where the model loss is equal to or larger than the loss limit, the parameter is discarded and the trust region radius is reduced.

Those processes are repeatedly executed until a predetermined number of iterations is reached.

However, such a conventional bit width adjustment method in quantization has a problem that a computation time is long. The first reason thereof is that the computation time in each iteration is long due to the large number of parameters in the neural network. Furthermore, the second reason is that, while some parameters such as the weight, activation (input value for intermediate layer), gradient, and the like are quantized, the computation time increases in proportion to the number of parameters to be quantized. The third reason is that there are multiple quantization iterations.

In view of the above, in a computer system 1a according to this modified example, the number of quantization iterations is reduced to shorten the computation time.

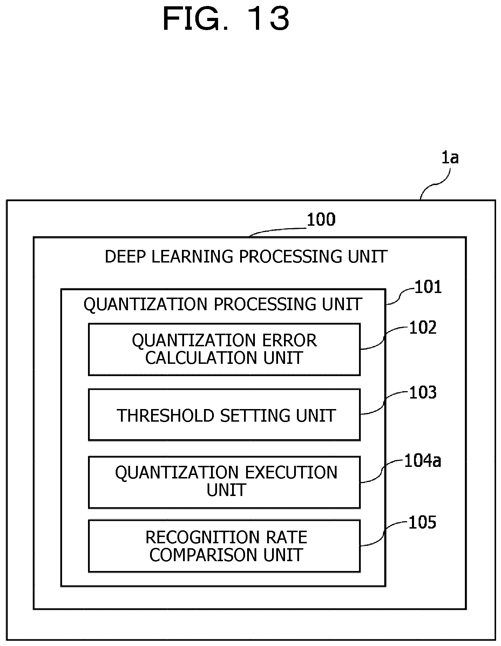

FIG. 13 is a diagram exemplifying a functional configuration of the computer system 1a as a modified example of the embodiment.

As illustrated in this FIG. 13, the computer system 1a according to this modified example includes a quantization execution unit 104a in place of the quantization execution unit 104 of the computer system 1 as an example of the embodiment exemplified in FIG. 2, and other parts are configured in a similar manner to the computer system 1.

Furthermore, the computer system 1a according to this modified example has a hardware configuration similar to that of the computer system 1 described above (see FIG. 1).

The quantization execution unit 104a has a function similar to that of the quantization execution unit 104 described above, and also has a quantization completion determination function of terminating a quantization process even when a predetermined number of iterations is not reached in a case where all parameters (tensors and elements) to be quantized are quantized to the minimum available bit width.

The minimum available bit width is the minimum bit width among candidates for parameter bit widths (bit width candidates) set by quantization. For example, in a case where the bit width candidates by quantization are three types of 8 bits, 16 bits, and 32 bits, the minimum bit width of 8 bits among them corresponds to the minimum available bit width.

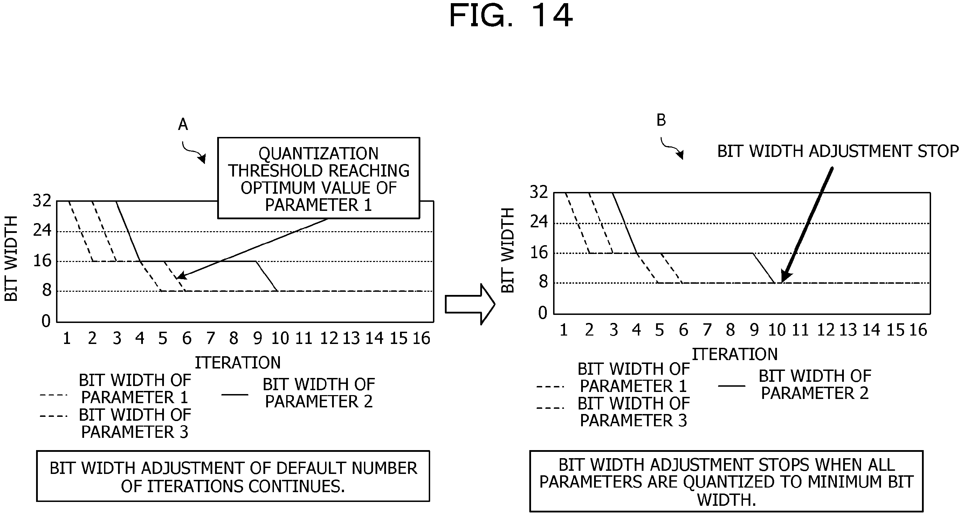

FIG. 14 is a diagram for explaining the function of the quantization execution unit 104a of the computer system 1a as a modified example of the embodiment.

In FIG. 14, a reference sign A indicates bit width transition (tendency) in bit width adjustment based on the conventional method, and a reference sign B indicates bit width transition in bit width adjustment based on the quantization process in the computer system 1a according to this modified example. Furthermore, the example illustrated in this FIG. 14 illustrates an exemplary case where the minimum available bit width is 8 bits.

Each of the examples indicated by the reference signs A and B illustrates transition of each of bit widths of three parameters 1 to 3 accompanying quantization.

In the quantization process based on the conventional method, as indicated by the reference sign A, the quantization process continues until the predetermined number of iterations set as a default value is reached even after the bit width of each parameter becomes 8 bits.

On the other hand, in the quantization process by the computer system 1a according this modified example, as indicated by the reference sign B, bit-width tuning stops to terminate the quantization process even if the number of iterations is not reached when the bit widths of all parameters become 8 bits, which is the minimum available bit width.

In other words, at a time of quantizing a plurality of elements, the quantization execution unit 104a terminates the quantization when all bit widths of the plurality of elements become the minimum available bit width.

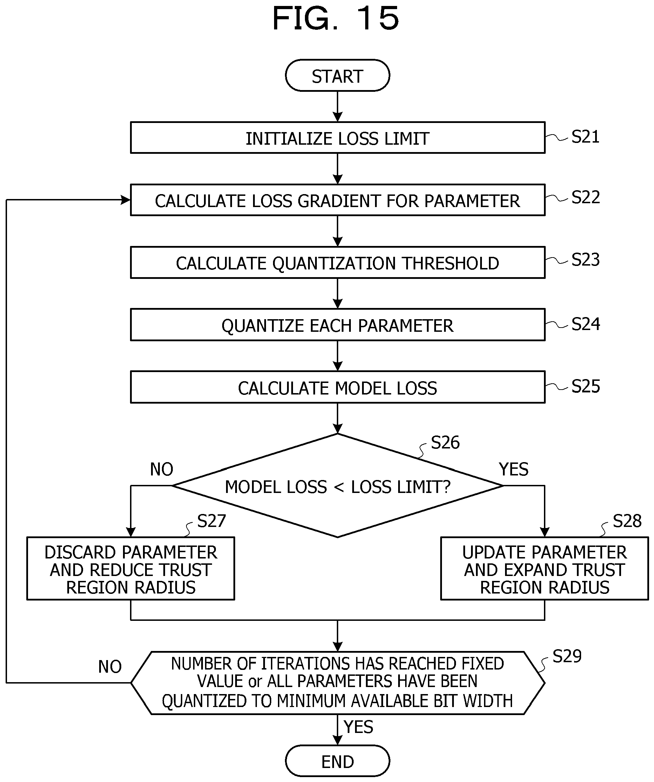

The quantization process in the computer system 1a as a modified example of the embodiment configured in this manner will be described with reference to a flowchart (steps S21 to S29) illustrated in FIG. 15.

The process to be described below may be executed in, for example, each quantization processing of steps S4 to S7 in the flowchart illustrated in FIG. 9, or may be executed in, for example, the processing of step S14 in the flowchart illustrated in FIG. 10.

In step S21, the quantization execution unit 104a initializes the loss limit.

In step S22, the quantization execution unit 104a calculates a loss gradient for each parameter.

The loss gradient is obtained by, for example, calculating aL(W)/aw. Note that dL(w) represents a loss value estimated by training a quantized model using a validation dataset, and aw represents a parameter during quantization.

In step S23, the quantization execution unit 104a calculates a quantization threshold based on the loss gradient.

In step S24, the quantization execution unit 104a quantizes each parameter. The quantization execution unit 104a determines a bit width for each parameter based on the quantization threshold set in step S23. Each parameter is quantized with the determined bit width.

In step S25, the quantization execution unit 104a calculates a model loss after the quantization of the parameter with the new bit width.

In step S26, the quantization execution unit 104a compares the calculated model loss with the loss limit, and checks whether the model loss is smaller than the loss limit. If the model loss is smaller than the loss limit (see YES route in step S26), the process proceeds to step S28. In step S28, the newly determined bit width is maintained, and is set in a machine learning model. Furthermore, the trust region radius is expanded. Thereafter, the process proceeds to step S29.

Furthermore, if the model loss is equal to or larger than the loss limit as a result of the checking in step S26 (see NO route in step S26), the process proceeds to step S27.

In step S27, the newly determined bit width is discarded, and the machine learning model retains the bit width before the quantization carried out in step S24. Furthermore, the trust region radius is reduced. Thereafter, the process proceeds to step S29.

In step S29, the quantization execution unit 104a checks whether either a first condition that the number of iterations has reached a predetermined fixed value (threshold) or a second condition that all parameters have been quantized to the minimum available bit width is satisfied.

If neither the first condition nor the second condition is satisfied (see NO route in step S29), the process returns to step S22.

On the other hand, if at least one of the first condition and the second condition is satisfied (see YES route in step S29), the process is terminated.

As a result, the process of steps S22 to S28 is repeated a fixed number of times of the iteration default until the first condition or the second condition is satisfied. The quantization threshold is approximated at each iteration, and the bit width is also approximated as a result thereof. Then, the quantization is complete at the timing when the first condition or the second condition is satisfied first.

As described above, according to the computer system 1a as a modified example of the embodiment, the quantization is stopped (terminated) when the quantization execution unit 104a confirms that all parameters are quantized to the minimum available bit width even in a case where the number of iterations has not reached the predetermined fixed value (threshold). As a result, it becomes possible to shorten the computation time of the quantization process, and to reduce the computation cost.

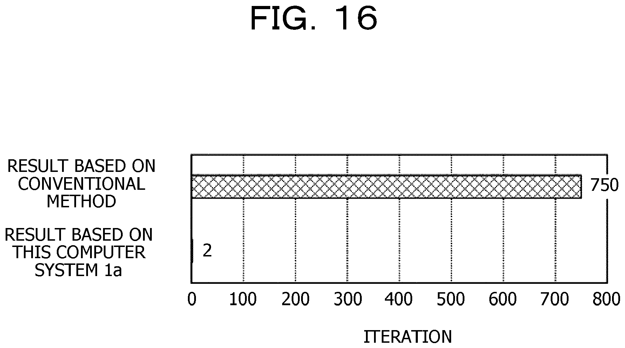

FIGs. 16 to 19 are diagrams illustrating simulation results of the quantization process by the computer system 1a as a modified example of the embodiment in comparison with the conventional method.

Note that those simulation results have been obtained under the following conditions.

Network architecture: Transformer
Dataset: Multi30k - German-English translation dataset
Dataset partition: Train
data: 29000 (sentences)
Validation data: 1014
Test data: 1000
Training duration:10 epochs
Default number of iterations: 15
Quantized module: linear layers (q, k, v) in multi-head attention, encoder; total number of linear layers: 9
Quantized variables: weight, activations, gradients of weights, gradients of activations
Bit-width candidates: 8, 16, 32

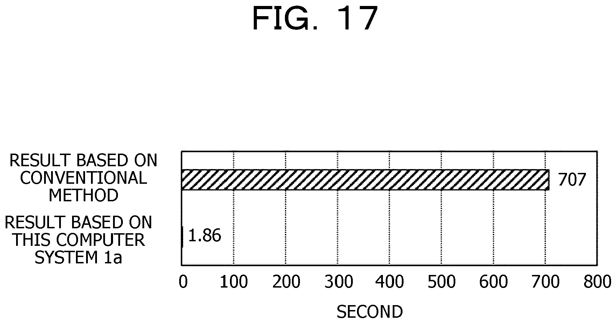

FIG. 16 illustrates the number of iterations performed for the bit width adjustment of the activation gradient in comparison between the conventional method and the quantization processing method by this computer system 1a, and FIG. 17 illustrates a time needed for the bit width adjustment of the activation gradient in comparison between the conventional method and the quantization processing method by this computer system 1a.

As illustrated in FIG. 16, according to the quantization processing method by this computer system 1a, the quantization process stops when the quantization execution unit 104a confirms that all parameters are quantized to the minimum available bit width, whereby the number of iterations is reduced compared to the conventional method. As a result, as illustrated in FIG. 17, the time needed for the bit width adjustment of the activation gradient is shortened.

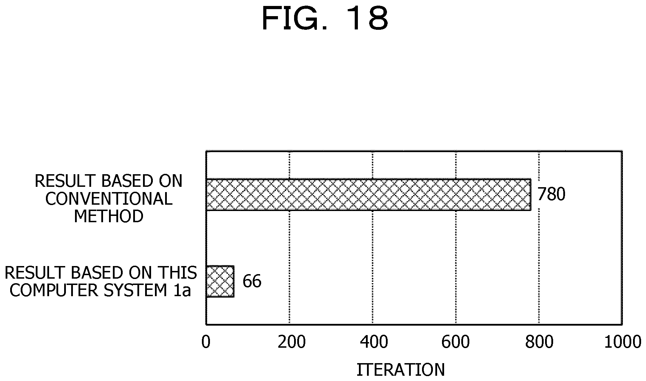

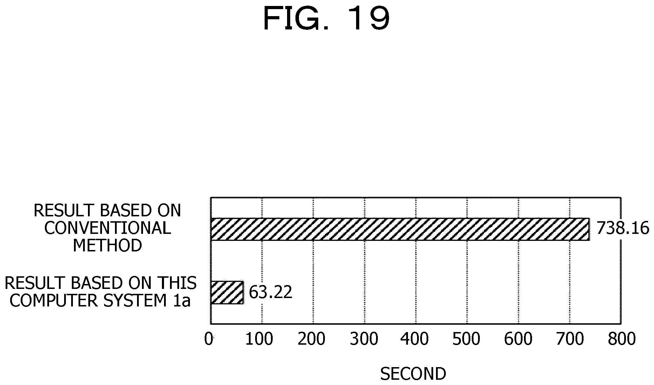

FIG. 18 illustrates the number of iterations performed for the bit width adjustment of the weight gradient in comparison between the conventional method and the quantization processing method by this computer system 1a, and FIG. 19 illustrates a time needed for the bit width adjustment of the weight gradient in comparison between the conventional method and the quantization processing method by this computer system 1a.

As illustrated in FIG. 18, according to the quantization processing method by this computer system 1a, the quantization process stops when the quantization execution unit 104a confirms that all parameters are quantized to the minimum available bit width, whereby the number of iterations is reduced compared to the conventional method. As a result, as illustrated in FIG. 19, the time needed for the bit width adjustment of the weight gradient is shortened.

(F) Others

The disclosed technique is not limited to the embodiment described above, and various modifications may be made without departing from the spirit of the present embodiment. Each of the configurations and processes of the present embodiment may be selected or omitted as needed or may be appropriately combined.

Furthermore, the present embodiment may be implemented and manufactured by those skilled in the art according to the disclosure described above.

REFERENCE SIGNS LIST

1, 1aComputer system
10CPU
11Memory
12Accelerator
13Communication bus
100Deep Learning Processing Unit
101Quantization Processing Unit
102Quantization Error Calculation Unit
103Threshold Setting Unit
104, 104aQuantization Execution Unit
105Recognition Rate Comparison Unit

**Claims**

1.  An information processing apparatus comprising:

    a processor that executes quantization of data to be quantized, wherein
    the processor is configured to
    uniformly quantize a plurality of elements included in a gradient vector in backpropagation of a neural network.

2.  The information processing apparatus according to claim 1, wherein

    the processor is configured to
    make a data type of the plurality of elements included in the gradient vector the same to quantize the elements.

3.  The information processing apparatus according to claim 1 or 2, wherein

    the processor is configured to
    determine whether or not the quantization is possible with a threshold based on a loss function for next training
    subsequently executed when executing the quantization of the plurality of elements included in the gradient
    vector.

4.  The information processing apparatus according to any one of claims 1 to 3, wherein

    the processor is configured to
    quantize an activation vector in forward propagation of the neural network.

5.  The information processing apparatus according to claim 4, wherein

    the processor is configured to
    make a data type of a plurality of elements included in the activation vector the same to quantize the elements.

6.  An information processing apparatus comprising:

    a processor that executes quantization of data to be quantized, wherein
    the processor is configured to
    quantize an activation vector in forward propagation of a neural network.

7.  The information processing apparatus according to claim 6, wherein

    the processor is configured to
    make a data type of a plurality of elements included in the activation vector the same to quantize the elements.

8.  An information processing method for a processor that executes quantization of data to be quantized, the information
    processing method comprising:

    determining whether or not the quantization is possible;
    uniformly quantizing a plurality of elements included in a gradient vector in backpropagation of a neural network.

9.  The information processing method according to claim 8, wherein
    the quantizing includes making a data type of the plurality of elements included in the gradient vector the same to
    quantize the elements.

10. The information processing method according to claim 8 or 9, wherein
    the determining includes determining whether or not the quantization is possible with a threshold based on a loss
    function for next training subsequently executed when executing the quantization of the plurality of elements included
    in the gradient vector.

11. The information processing method according to any one of claims 8 to 10, wherein
    the quantizing includes quantizing an activation vector in forward propagation of the neural network.

12. The information processing method according to claim 11, wherein the quantizing includes making a data type of a plurality of elements included in the activation vector the same to quantize the elements.

13. An information processing method for a processor that executes quantization of data to be quantized, the information processing method comprising
quantizing an activation vector in forward propagation of a neural network.

14. The information processing method according to claim 13, wherein
the quantizing includes making a data type of a plurality of elements included in the activation vector the same to quantize the elements.

15. An information processing program that causes a processor that executes quantization of data to be quantized to execute a process, the process comprising
uniformly quantizing a plurality of elements included in a gradient vector in backpropagation of a neural network.

16. The information processing program according to claim 15, further causes the processor to execute the process, the process further comprising
making a data type of the plurality of elements included in the gradient vector the same to quantize the elements.

17. The information processing program according to claim 15 or 16, further causes the processor to execute the process, the process further comprising
determining whether or not the quantization is possible with a threshold based on a loss function for next training subsequently executed when executing the quantization of the plurality of elements included in the gradient vector.

18. The information processing program according to any one of claims 15 to 17, further causes the processor to execute the process, the process further comprising
quantizing an activation vector in forward propagation of the neural network.

19. The information processing program according to claim 18, further causes the processor to execute the process, the process further comprising
making a data type of a plurality of elements included in the activation vector the same to quantize the elements.

20. An information processing program that causes a processor that executes quantization of data to be quantized to execute a process, the process comprising
quantizing an activation vector in forward propagation of a neural network.

21. The information processing program according to claim 20, further causes the processor to execute the process, the process further comprising
making a data type of a plurality of elements included in the activation vector the same to quantize the elements.

22. The information processing apparatus according to any one of claims 1 to 5 and 7, wherein
the processor is configured to:
when executing the quantization of the plurality of elements, terminate the quantization in a case where all bit widths of the plurality of elements become a minimum available bit width.

# FIG. 1

COMPUTER SYSTEM

13

COMMUNICATION BUS

CPU

MEMORY

ACCELERATOR

10

11

12

1

# FIG. 2

1

100

DEEP LEARNING PROCESSING UNIT

QUANTIZATION
PROCESSING UNIT — 101

QUANTIZATION ERROR
CALCULATION UNIT — 102

THRESHOLD SETTING
UNIT — 103

QUANTIZATION
EXECUTION UNIT — 104

RECOGNITION RATE
COMPARISON UNIT — 105

FIG. 3

# FIG. 4

# FIG. 5

Forward CALCULATION GRAPH

Backward CALCULATION GRAPH

# FIG. 6

k-TH TRAINING

$w_{1,k}$  $w_{2,k}$

$x_{1,k}$  $x_{2,k}$

LOSS
FUNCTION
$L_k(W+\Delta W, X+\Delta X)$

$gx_{1,k}$  $gx_{2,k}$

$gw_{1,k}$  $gw_{2,k}$

$w_{1,k+1}=w_{1,k}-\eta \cdot gw_{1,k}$

A

(k + 1)-TH TRAINING

$w_{1,k+1}$  $w_{2,k+1}$

$x_{1,k+1}$  $x_{2,k+1}$

LOSS
FUNCTION
$L_{k+1}(W+\Delta W, X+\Delta X)$

$gx_{1,k+1}$  $gx_{2,k+1}$

$gw_{1,k+1}$  $gw_{2,k+1}$

(k + 1)-TH LOSS FUNCTION AND GRADIENT ARE USED TO
DETERMINE K-TH GRADIENT THRESHOLD

B

# FIG. 7

QUANTIZATION ERROR $\Delta W_{k+1}$ GENERATED BY QUANTIZING k-TH WEIGHT GRADIENT

QUANTIZATION ERROR $\Delta W_{k+1}$ OF CASE WITHOUT QUANTIZATION

$$L(W_{k+1} + \Delta W_{k+1}) \sim L(W_{k+1}) + \frac{\partial L(W_{k+1})}{\partial W_{k+1}} \Delta W_{k+1} \leq Loss_{FP32,k+1}$$

A

$$\Delta W_{k+1} = \sum_{i=1}^{n} \left| \Delta w_{i,k+1} \right| \leq \sum_{i=1}^{n} \frac{Loss_{FP32,k+1} - L(W_{k+1})}{n \cdot \left| \frac{\partial L(W_{k+1})}{\partial w_{i,k+1}} \right|}$$

B

THRESHOLD OF ERROR ALLOWED FOR k-TH WEIGHT GRADIENT IS SUCCESSFULLY DERIVED BY USING (K + 1)-TH LOSS FUNCTION AND GRADIENT

# FIG. 8

Forward CALCULATION GRAPH

Backward CALCULATION GRAPH

# FIG. 9

```
         ( START )
             │
             ▼
┌─────────────────────────────┐
│      SET INITIAL VALUE       │──S1
└─────────────────────────────┘
             │
             ▼
┌─────────────────────────────┐
│   PERFORM WARM-UP TRAINING   │──S2
└─────────────────────────────┘
             │
             ▼
┌─────────────────────────────┐
│       RESET BIT WIDTH        │──S3
└─────────────────────────────┘
             │
             ▼
┌─────────────────────────────┐
│       QUANTIZE WEIGHT        │──S4
└─────────────────────────────┘
             │
             ▼
┌─────────────────────────────┐
│     QUANTIZE ACTIVATION      │──S5
└─────────────────────────────┘
             │
             ▼
┌─────────────────────────────┐
│  QUANTIZE ACTIVATION GRADIENT│──S6
└─────────────────────────────┘
             │
             ▼
┌─────────────────────────────┐
│   QUANTIZE WEIGHT GRADIENT   │──S7
└─────────────────────────────┘
             │
             ▼
┌─────────────────────────────┐
│ PERFORM TRAINING USING       │──S8
│ QUANTIZED MODEL              │
└─────────────────────────────┘
             │
             ▼
         ◇ S9
  NO    IS SET NUMBER OF TIMES
◀───── OF TRAINING COMPLETE?
             │ YES
             ▼
         ( END )
```

# FIG. 10

START

CALCULATE LOSS FUNCTION OF FP32 BY INFERENCE — S11

DETERMINE LAYER TO BE QUANTIZED — S12

CALCULATE THRESHOLD Qth OF QUANTIZATION ERROR FOR EACH TENSOR — S13

PERFORM QUANTIZATION FOR EACH TENSOR WHILE CHANGING BIT WIDTH, AND OBTAIN QUANTIZATION ERROR; OBTAIN MINIMUM BIT WIDTH THAT MAKES ERROR SMALLER THAN THRESHOLD — S14

IS QUANTIZATION COMPLETE FOR ALL LAYERS? — S15

NO

YES

IS QUANTIZED MODEL RECOGNITION RATE EQUIVALENT TO FP32 RECOGNITION RATE? — S16

NO

YES

SET PARAMETER TO MAKE THRESHOLD SMALLER (INCREASE Lth) — S17

END

# FIG. 11

QUANTIZED NN RECOGNITION RATE IS
EQUIVALENT TO FP32 RESULT

| | |
|---|---|
| ········ | : ALL TRAINED WITH float32 |
| —— | : QUANTIZED BY CONVENTIONAL TECHNIQUE |
| - - - | : QUANTIZED BY THIS INVENTION |

# FIG. 12

```
........ : ALL TRAINED WITH float32
——— : QUANTIZED BY CONVENTIONAL TECHNIQUE
- - - : QUANTIZED BY THIS INVENTION
```

# FIG. 13

1a

100

DEEP LEARNING PROCESSING UNIT

QUANTIZATION PROCESSING UNIT — 101

QUANTIZATION ERROR
CALCULATION UNIT — 102

THRESHOLD SETTING UNIT — 103

QUANTIZATION EXECUTION
UNIT — 104a

RECOGNITION RATE
COMPARISON UNIT — 105

# FIG. 14

A

QUANTIZATION THRESHOLD REACHING OPTIMUM VALUE OF PARAMETER 1

BIT WIDTH

32
24
16
8
0

1 2 3 4 5 6 7 8 9 10 11 12 13 14 15 16

ITERATION

- - - · BIT WIDTH OF PARAMETER 1
——— BIT WIDTH OF PARAMETER 2
- - - · BIT WIDTH OF PARAMETER 3

BIT WIDTH ADJUSTMENT OF DEFAULT NUMBER OF ITERATIONS CONTINUES.

B

BIT WIDTH ADJUSTMENT STOP

BIT WIDTH

32
24
16
8
0

1 2 3 4 5 6 7 8 9 10 11 12 13 14 15 16

ITERATION

- - - · BIT WIDTH OF PARAMETER 1
——— BIT WIDTH OF PARAMETER 2
- - - · BIT WIDTH OF PARAMETER 3

BIT WIDTH ADJUSTMENT STOPS WHEN ALL PARAMETERS ARE QUANTIZED TO MINIMUM BIT WIDTH.

EP 4 181 022 A1

# FIG. 15

```
          ┌─────────────┐
          │    START    │
          └─────────────┘
                 │
                 ▼
   ┌───────────────────────────────────┐
   │      INITIALIZE LOSS LIMIT         │──── S21
   └───────────────────────────────────┘
                 │
                 ▼
   ┌───────────────────────────────────┐
   │  CALCULATE LOSS GRADIENT FOR       │──── S22
   │           PARAMETER                │
   └───────────────────────────────────┘
                 │
                 ▼
   ┌───────────────────────────────────┐
   │   CALCULATE QUANTIZATION THRESHOLD │──── S23
   └───────────────────────────────────┘
                 │
                 ▼
   ┌───────────────────────────────────┐
   │       QUANTIZE EACH PARAMETER      │──── S24
   └───────────────────────────────────┘
                 │
                 ▼
   ┌───────────────────────────────────┐
   │       CALCULATE MODEL LOSS         │──── S25
   └───────────────────────────────────┘
                 │
                 ▼
              S26
    NO ◁───  MODEL LOSS < LOSS LIMIT?  ───▷ YES
```

S27 — DISCARD PARAMETER AND REDUCE TRUST REGION RADIUS

S28 — UPDATE PARAMETER AND EXPAND TRUST REGION RADIUS

S29 — NO ◁── NUMBER OF ITERATIONS HAS REACHED FIXED VALUE or ALL PARAMETERS HAVE BEEN QUANTIZED TO MINIMUM AVAILABLE BIT WIDTH ──▷ YES

END

# FIG. 16

RESULT BASED ON
CONVENTIONAL
METHOD

RESULT BASED ON
THIS COMPUTER
SYSTEM 1a

750

2

0    100   200   300   400   500   600   700   800

ITERATION

# FIG. 17

RESULT BASED ON
CONVENTIONAL
METHOD

RESULT BASED ON
THIS COMPUTER
SYSTEM 1a

707

1.86

0   100   200   300   400   500   600   700   800

SECOND

# FIG. 18

RESULT BASED ON
CONVENTIONAL
METHOD

780

RESULT BASED ON THIS
COMPUTER SYSTEM 1a

66

| | | | | | |
| 0 | 200 | 400 | 600 | 800 | 1000 |

ITERATION

# FIG. 19

RESULT BASED ON
CONVENTIONAL
METHOD ▨▨▨▨▨▨▨▨▨▨▨▨▨ 738.16

RESULT BASED ON THIS
COMPUTER SYSTEM 1a ▨ 63.22

```
0    100  200  300  400  500  600  700  800
                  SECOND
```

## INTERNATIONAL SEARCH REPORT

| | International application No. |
|---|---|
| | PCT/JP2020/047958 |

**A. CLASSIFICATION OF SUBJECT MATTER**
Int. Cl. G06N3/06(2006.01)i, G06N3/08(2006.01)i, G06N20/00(2019.01)i
FI: G06N3/06, G06N3/08, G06N20/00

According to International Patent Classification (IPC) or to both national classification and IPC

**B. FIELDS SEARCHED**

Minimum documentation searched (classification system followed by classification symbols)
Int. Cl. G06N3/06, G06N3/08, G06N20/00

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | 廣瀬一俊,植松瞭太,安藤洸太,折茂健太郎,植吉晃大,高前田伸也,池辺将之,浅井哲也,本村真人．対数量子化による深層ニューラルネットワークのメモリ量削減．電子情報通信学会技術研究報告．15 May 2017, vol. 117, no. 44, pp. 39-44, ISSN: 0913-5685, abstract, (IEICE Technical Report), non-official translation (HIROSE, Kazutoshi, UEMATSU, Ryota, ANDO, Kota, ORIMO, Kentaro, UEYOSHI, Kodai, TAKAMAEDA, Shinya, IKEBE, Masayuki, ASAI, Tetsuya, MOTOMURA, Masato. Memory Volume Reduction in Neural Networks by Logarithmic Quantization.) | 1, 8, 15<br>2-5, 9-12, 16-19 |
| Y | WO 2018/140294 A1 (MICROSOFT TECHNOLOGY LICENSING, LLC) 02 August 2018, paragraphs [0062], [0063], [0065], [0081] | 2-5, 9-12, 16-19 |

☒ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17.03.2021 | 30.03.2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

34

## EP 4 181 022 A1

**INTERNATIONAL SEARCH REPORT**

| International application No. |
| --- |
| PCT/JP2020/047958 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | 門倉巧,中野秀洋,宮内新. Quantized Neural Networks における量子化関数に関する検討. 電子情報通信学会技術研究報告. 22 | 6, 20 |
| Y | June 2017, vol. 117, no. 112, pp. 7-10, ISSN: 0913-5685, abstract, "3. Quantized Neural Network (QNN) [9]", (KADOKURA, Takumi, NAKANO, Hidehiro, MIYAUCHI, Arata. Consideration on Functions for Quantization in Quantized Neural Networks. IEICE Technical Report.) | 4-5, 7, 11-14, 18-19, 21 |
| Y | JP 2019-079531 A (SAMSUNG ELECTRONICS CO., LTD.) 23 May 2019, paragraphs [0015]-[0017] | 5, 7, 12, 14, 19, 21 |
| Y | US 2019/0227893 A1 (IMAGINATION TECHNOLOGIES LIMITED) 25 July 2019, paragraphs [0062]-[0087] | 13-14 |
| A | JP 2019-080232 A (PREFERRED NETWORKS INC.) 23 May 2019, paragraphs [0022]-[0029], [0052]-[0063] | 1-22 |
| A | JP 2019-032833 A (SAMSUNG ELECTRONICS CO., LTD.) 28 February 2019, entire text, all drawings | 1-22 |
| A | JP 2018-142049 A (HITACHI, LTD.) 13 September 2018, paragraphs [0042]-[0049] | 1-22 |
| A | JP 07-084975 A (HITACHI, LTD.) 31 March 1995, abstract | 1-22 |

Form PCT/ISA/210 (continuation of second sheet) (January 2015)

35

**INTERNATIONAL SEARCH REPORT**
Information on patent family members

| International application No. |
|---|
| PCT/JP2020/047958 |

| Patent Documents referred to in the Report | Publication Date | Patent Family | Publication Date |
|---|---|---|---|
| WO 2018/140294 A1 | 02.08.2018 | CN 108345939 A paragraphs [0079], [0080], [0082], [0101] | |
| JP 2019-079531 A | 23.05.2019 | US 2019/0122100 A1 paragraphs [0041], [0043], [0047] EP 3474194 A1 KR 10-2019-0043849 A CN 109685198 A | |
| US 2019/0227893 A1 | 25.07.2019 | EP 3480690 A1 paragraphs [0048]-[0074] GB 2568084 A CN 110009099 A | |
| JP 2019-080232 A | 23.05.2019 | US 2019/0156213 A1 paragraphs [0030]-[0037], [0062]-[0074] | |
| JP 2019-032833 A | 28.02.2019 | US 2019/0042948 A1 entire text, all drawings EP 3438890 A1 KR 10-2019-0014900 A CN 109389219 A | |
| JP 2018-142049 A | 13.09.2018 | US 2018/0247182 A1 paragraphs [0057]-[0064] | |
| JP 07-084975 A | 31.03.1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019008752 A

**Non-patent literature cited in the description**

- **S. KHORAM et al.** Adaptive quantization of neural networks. *ICLR,* 2018